# EUROPÄISCHE PATENTANMELDUNG

(11) **EP 1 313 347 A1**
(43) Veröffentlichungstag der Anmeldung: **21.05.2003**
(21) Anmeldenummer: 01440395.0
(22) Anmeldetag: 20.11.2001
(51) Int. Cl.: H04Q 11/00, H04Q 11/04

(54) **Routing in Übertragungsnetzen**

(71) Anmelder: ALCATEL, 75008 Paris (FR)
(72) Erfinder: Grammel, Gert, 73066 Uhingen (DE)
(74) Vertreter: Menzietti, Domenico, Dipl.-Ing

(57) **Zusammenfassung**

Aufgabe der Erfindung ist es, ein schnelleres Routing zur Verfügung zu stellen. Das erfindungsgemäße SONET-, SDH- oder OTN-Netz beinhaltet mindestens zwei Netzelemente (1, 2, 3, 4, XC1, XC4), die direkt oder indirekt miteinander verbunden sind und jeweils geeignet sind, selbstständig die Ermittlung und Schaltung eines Pfads durch zumindest einen Teil des SONET-, SDH- oder OTN-Netzes vorzunehmen, wobei die Ermittlung des Pfads aus in den Netzelementen abgespeicherten Verbindungsinformationen und einer im Pfad Identifier enthaltenen Zieladresse erfolgt. Das OTN-Netz kann beispielsweise auch WDM-Knoten und IP-Router beinhalten. Ein Netzelement ist beispielsweise ein WDM-Knoten, ein IP-Router, ein Netzknoten, ein Multiplexer, ein Cross-Connect, ein Add/Drop-Multiplexer, etc. Die Verbindungsinformationen enthalten Informationen darüber, welches Netzelement mit welchem verbunden ist.

## Beschreibung

Die Erfindung betrifft ein SONET-, SDH- oder OTN-Netz, ein Routing-Verfahren, ein Netzelement sowie einen Netzwerk Route Prozessor.

Aus WO 00/44118 ist ein optisches Netz mit einem optischen Signalisierungs-Header bekannt. Paket Routing Informationen werden im gleichen Übertragungskanal oder bei der gleichen Wellenlänge übertragen wie die Daten Payload. Damit propagieren Header und Payload durch die Netzelemente unter Verwendung des selben Pfads wodurch auch die selben zeitlichen Verzögerungen auftreten. Paket Routing erfordert Peer-to-Peer Kommunikation zum Austausch von Routing Information.

Aufgabe der Erfindung ist es, ein schnelleres Routing zur Verfügung zu stellen.

Gelöst wird diese Aufgabe erfindungsgemäß durch ein SONET-, SDH- oder OTN-Netz gemäß Patentanspruch 1, ein Verfahren gemäß Patentanspruch 3, ein Netzelement gemäß Patentanspruch 4 sowie einen Netzwerk Route Prozessor gemäß Patentanspruch 5.

Netzknoten in Übertragungsnetzen werden mit der Möglichkeit versehen, selbstständig einen Pfad durch das gesamte Netz zu schalten. Anstatt Paketinformation über den zur Übertragung dienenden Übertragungsweg zu binden, wie z.B. bei Routern üblich, wird Statusinformation im Transmission Layer verwendet. Dadurch ist eine höhere Reaktionsgeschwindigkeit möglich, d.h. das Routen durch das Netz wird beschleunigt. Ferner können existierende Features aus SONET-, SDH- und OTN-Netzen mitverwendet werden; SONET= Synchronous Optical Network, SDH= Synchronous Digital Hierarchy, OTN= Optical Transmission Network. Zudem kann die Erfindung auf bereits existierendes Equipment angewendet werden durch Einsatz von Netzwerk Route Prozessoren.

In SONET-, SDH- und OTN-Netzen wird Overhead Information zum Zwecke der Überwachung und Maintenance zusätzlich zur Payload Information übertragen. Diese Overhead Information ist zum einen der Payload Information zugeordnet und zum anderen dem Segment des Netzes, in dem die Overhead Information Gültigkeit hat.

In SONET- und SDH-Netzen beinhaltet die Overhead Information z.B. eine Zuordnung zur Regenerator Section auf der Verbindungsstrecke zwischen zwei Regeneratoren und eine Zuordnung zu einer Multiplex Section auf der Verbindungsstrecke zwischen zwei Multiplexern oder zwei Cross- Connects. Zwischen zwei sogenannten client service devices wird der Pfad Overhead übertragen.

Der Section oder Pfad Identifier wird derart kodiert, dass er Informationen über das mit ihm verbundene Endgerät enthält. Dies kann durch Verwendung der IP-Adresse des Endgeräts oder durch eine andere Adresse erfolgen, durch die das Endgerät identifizierbar ist; IP= Internet Protocol.

Zumindest ein Ende der Verbindung, vorteilhafterweise beide Enden werden identifiziert. Im Falle von Multicast-Verbindungen beinhaltet das Identifier Feld z.B. mehr als zwei Endadressen.

Auf Grund der Endpunkt Identifikation wird es einem Netzknoten ermöglicht, durch Verwendung einer eigenen Routing-Maschine einen Pfad durch das Netz zu bestimmen. Dies wird dadurch erreicht, das Verbindungsinformation zwischen den Netzknoten ausgetauscht wird. Diese Verbindungsinformation basiert auf Protokollen und der Infrastruktur und ist nicht unbedingt identisch mit den tatsächlichen physikalischen Verbindungen der Netzknoten.

Basierend auf dieser Verbindungsinformation ist in SONET-, SDH- und OTN-Netzen Routing möglich, das ohne Verwendung von Paketinformation und Linkstatusinformation, die auf dieser Paketinformation basiert.

Durch den direkten Zugriff auf die Overhead Information können Fehler schnell erkannt und behoben werden.

Für bereits in Betrieb befindliche Netze kann ein Netzwerk Route Prozessor eingeführt werden, der die Routing Aufgabe anstelle der Netzelemente übernimmt.

Es ist nicht erforderlich, dass Paket basierte Routing Information über die selbe physikalische Infrastruktur transportiert wird, wie die Daten Payload. Informationen bezüglich der Verfügbarkeit von Verbindungen können zwischen den Netzelementen ausgetauscht werden ohne Punkt-zu-Punkt Verbindungen bereitzustellen. Dies erhöht die Geschwindigkeit für den Routing Prozess.

Das erfindungsgemäße SONET-, SDH- oder OTN-Netz beinhaltet mindestens zwei Netzelemente, die direkt oder indirekt miteinander verbunden sind und jeweils geeignet sind, selbstständig die Ermittlung und Schaltung eines Pfads durch zumindest einen Teil des SONET-, SDH- oder OTN-Netzes vorzunehmen, wobei die Ermittlung des Pfads aus in den Netzelementen abgespeicherten Verbindungsinformationen und einer im Pfad Identifier enthaltenen Zieladresse erfolgt. Das OTN-Netz kann beispielsweise auch WDM-Knoten und IP-Router beinhalten, WDM= Wavelength Division Multiplex. Ein Netzelement ist beispielsweise ein WDM-Knoten, ein IP-Router, ein Netzknoten, ein Multiplexer, ein Cross-Connect, ein Add/Drop-Multiplexer, etc. Die Verbindungsinformationen enthalten Informationen darüber, welches Netzelement mit welchem verbunden ist. So erhält jedes Netzelement zumindest über Teilbereiche des Netzes eine Übersicht und kann autark entscheiden, zu welchem benachbarten Netzelement der Pfad weitergeschaltet wird. Der Pfad wird möglichst in Richtung der Zieladresse unter Berücksichtigung der kleinsten Anzahl von zwischengeschalteten Netzelementen geschaltet.

In einer bevorzugten Ausführungsform ist ein Overlay-Netz vorhanden ist, über das die Verbindungsinformationen verteilt werden. Um das Datennetz nicht mit Zusatzinformationen zu blockieren kann ein Overlay-Netz eingeführt werden, das zur Übertragung der Verbindungsinformationen dient. Die Daten und die Pfad Informationen werden über das SONET-, SDH- oder OTN-Netz übertragen, die Verbindungsinformationen über das separate Overlay-Netz. Das Overlay-Netz kann das Netzwerk-Management-Netz sein, über das auch Überwachungsinformationen, Maintenance, etc. übertragen wird.

Das erfindungsgemäße Verfahren zum Schalten eines Pfads durch ein SONET-, SDH- oder OTN-Netz, bei dem ein Pfad Identifier beinhaltend die Zieladresse übertragen wird und bei dem im SONET-, SDH- oder OTN-Netz befindliche Netzelemente selbstständig die Ermittlung und Schaltung des Pfads vornehmen, wobei die Ermittlung des Pfads aus in den Netzelementen abgespeicherten Verbindungsinformationen und der Zieladresse erfolgt.

Das erfindungsgemäße Netzelement für ein SONET-, SDH- oder OTN-Netz, beinhaltend einen Prozessor und einen Speicher zum Empfang und zum Speichern von Verbindungsinformationen und eines Pfad Identifiers sowie zur Ermittlung eines Pfads durch zumindest einen Teil des SONET-, SDH- oder OTN-Netzes aus den Verbindungsinformationen und einer im Pfad Identifier enthaltenen Zieladresse und zur selbstständigen Schaltung des Pfads zu einem benachbarten Netzelement. Der Prozessor ist beispielsweise als DSP oder Mikroprozessor ausgeführt, DSP= Digital Signal Processor. Der Prozessor wird entsprechend programmiert, um die geforderten Aufgaben auszuführen. Dazu wird z.B. eine Software-Programmierung mittels Computerprogramm in Programmiersprache C++ durchgeführt.

Der erfindungsgemäße Netzwerk Route Prozessor dient zur Steuerung mindestens eines Netzelements für ein SONET-, SDH- oder OTN-Netz und beinhaltet einen Prozessor und einen Speicher zum Empfang und zum Speichern von Verbindungsinformationen und eines Pfad Identifiers sowie zur Ermittlung eines Pfads durch zumindest einen Teil des SONET-, SDHoder OTN-Netzes aus den Verbindungsinformationen und einer im Pfad Identifier enthaltenen Zieladresse und zur Ansteuerung mindestens eines Netzelements zwecks Schaltung des Pfads.

Vorteilhafte Ausgestaltungen der Erfindung sind den abhängigen Ansprüchen und der nachfolgenden Beschreibung zu entnehmen.

Im folgenden wird drei Ausführungsbeispiele der Erfindung anhand von fünf Figuren erläutert. Es zeigen:
- Fig. 1: eine schematische Darstellung eines Netzes mit zwei Routern und vier Netzelementen,
- Fig. 2: eine weitere schematische Darstellung eines Netzes mit zwei Routern und vier Netzelementen,
- Fig. 3: ein Beispiel eines Pfad Aufbaus,
- Fig. 4: ein Beispiel des Auffinden eines neuen Pfads im Falle einer Störung,
- Fig. 5: eine schematische Darstellung eines Netzes mit ausgelagerter Routingentscheidung.

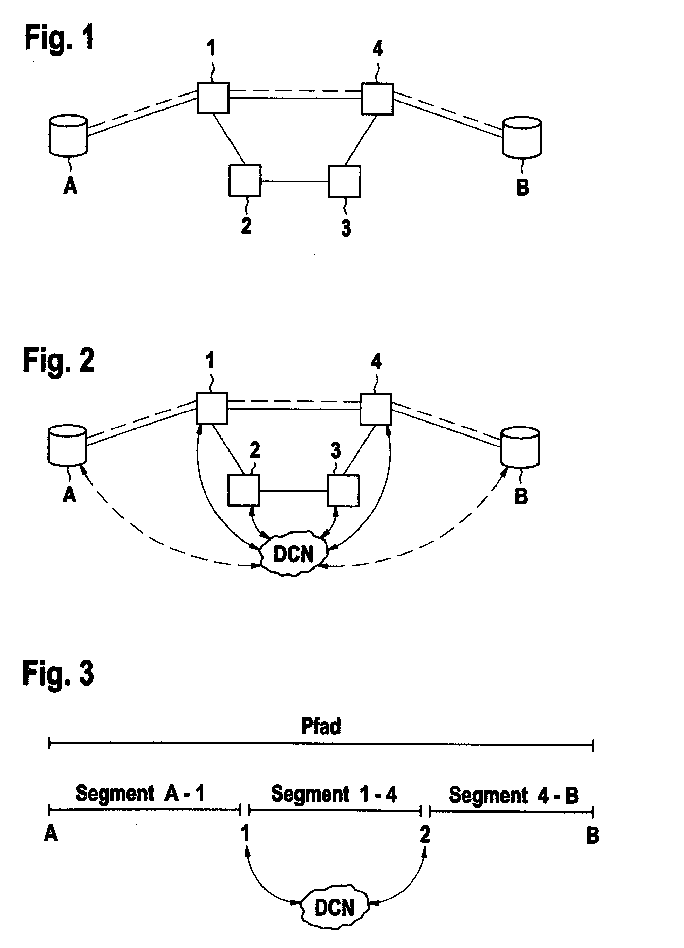

Das erste Ausführungsbeispiel wird nun anhand der Figur 1 erläutert. Fig. 1 zeigt ein Netz mit zwei Routern und vier Netzelementen. Ein Netzelement ist z.B. ein Cross-Connect, ein Multiplexer, ein Regenerator oder ein Netzknoten. Router A ist über eine Reihenschaltung aus Netzelement 1 und Netzelement 4 mit Router B verbunden. Netzelement 2 ist über eine Reihenschaltung aus Netzelement 2 und Netzelement 3 mit Netzelement 4 verbunden.

Verbindungsinformation, die aus dem Segment Overhead gewonnen werden kann:
Router A ist verbunden mit Netzelement 1.
Netzelement 1 ist verbunden mit Netzelement 2, Netzelement 4 und Router A.
Netzelement 2 ist verbunden mit Netzelement 1 und Netzelement 3.
Netzelement 3 ist verbunden mit Netzelement 2 und Netzelement 4.
Netzelement 4 ist verbunden mit Netzelement 1, Netzelement 3 und Router B.
Router B ist verbunden mit Netzelement 4.

Verbindungsinformation, die aus dem Pfad Overhead gewonnen werden kann:
Router A ist mit Router B verbunden.
Netzelement 1 bedient die Verbindung Router A Router B.
Netzelement 2 bedient keine Verbindung.
Netzelement 3 bedient keine Verbindung.
Netzelement 4 bedient die Verbindung Router A Router B.

Im Netz werden die Verbindungsinformationen verteilt. Jedes Netzelement, das die Verbindungsinformationen empfängt, kann sich eine eigene Sicht über die Netzwerktopologie verschaffen. Die empfangenen Verbindungsinformationen werden z.B. in einer Verbindungstabelle gespeichert. Ist z.B. der Link zwischen den Netzelementen 1 und 4 gestört, so kann Netzelement 1 mittels der Informationen aus der Verbindungstabelle selbstständig entscheiden, den gestörten Link zu Netzelement 2 umzuleiten. Basierend auf dem gleichen Mechanismus kann Netzelement 2 den umgeleiteten Link zu Netzelement 3 weiterleiten und Netzelement 3 eine Weiterleitung zu Netzelement 4 durchführen.

Wenn ein Netzelement an einem seiner Eingänge eine neue Pfad Information empfängt, so überprüft es, ob es direkt mit einem Segment zu der Zieladresse des Pfad verbunden ist. Beispielsweise empfängt Netzelement 2 eine Pfad Information mit Zieladresse Router B. Netzelement 2 überprüft, ob es mit Router B direkt verbunden ist. Ist dies der Fall, wird der Pfad geschaltet. Ist dies nicht der Fall, wird anhand der Verbindungstabelle ein möglicher Pfad gesucht und der Pfad zum nächsten Netzelement weitergeleitet. Netzelement 2 leitet den Pfad somit zu Netzelement 1 oder 3 weiter.

Das zweite Ausführungsbeispiel wird nun anhand der Figuren 2 bis 4 erläutert. Fig. 2 zeigt das Netz aus Fig. 1 und zusätzlich ein Overlay Netz. Dem Overlay Netz DCN werden die Verbindungsinformationen zugeführt. Es erstellt eine Verbindungstabelle anhand derer die Schaltung der Pfade durchgeführt wird. Die Verbindung des Overlay Netzes DCN zu den Routern A und B ist optional, da die von den Routern A und B gelieferte Information redundant ist, da sie bereits in Netzelement 1 bzw. 4 vorhanden ist.

Fig. 3 zeigt ein Beispiel eines Pfad Aufbaus.

Es soll ein Pfad zwischen Router A und Router B aufgebaut werden.

Im ersten Schritt wird Router A mit Netzelement 1 verbunden. Router A fügt dazu seine ID in den Segment Overhead von Router A zu Netzelement 1 ein, ID= Identifier Information. Netzelement 1 empfängt die ID von Router A und fügt seinerseits seine ID in den Segment Overhead von Netzelement 1 zu Router A ein. Router A und Netzelement 1 speichern jeweils die neue Verbindungsinformation in ihrer lokalen Datenbank. Die neue Verbindungsinformation besagt, dass Router A über Netzelement 1 erreichbar ist und umgekehrt. Vergleichbares kann für alle anderen Verbindungen zwischen Netzelementen und zwischen Netzelementen und Routern durchgeführt werden.

Im zweiten Schritt wird die neue Verbindungsinformation von Netzelement 1 verteilt. Die neue Verbindungsinformation wird z.B. im Broadcast Verfahren zu allen mit Netzelement 1 verbundenen Netzelemente übertragen, z.B. auch zu Netzelement 4. Aus der empfangenen neuen Verbindungsinformation erhält Netzelement 4 die Information, dass Router A über Netzelement 1 erreichbar ist und umgekehrt. Diese Information wird in Netzelement 4 gespeichert. Vergleichbares kann für alle anderen Verbindungsinformationen zwischen Netzelementen und zwischen Netzelementen und Routern durchgeführt werden. Alle Netzelemente haben dann eine komplette Sicht über das Netz. Die ersten beiden Schritte können in einem zentralen Initialisierungsverfahren durchgeführt werden und sind dann für einen Aufbau eines einzelnen Pfads optional.

Im dritten Schritt schaltet Router A einen Pfad auf dem Segment Router A - Netzelement 1 mit der Information Router A - Router B Verbindung im Pfad Identifier. Netzelement 1 detektiert den neuen Pfad Identifier im Segment Router A - Netzelement 1 und überprüft anhand seiner Datenbank die nächstmögliche Verbindungsmöglichkeit in Richtung der Zieladresse Router B. Netzelement 1 schaltet daraufhin den Pfad Router A - Netzelement 1 - Netzelement 4. Netzelement 4 detektiert den neuen Pfad Identifier im Segment Netzelement 1 - Netzelement 4 und schaltet nach Überprüfung durch seine Routing Datenbank den Pfad Segment Netzelement 1 - Netzelement 4 - Router B.

Im vierten Schritt detektiert Router B eine neue Verbindung. Der Pfad Identifier identifiziert Router A als den Endpunkt der neuen Verbindung. Der Pfad Router A - Router B ist geschaltet. Kommunikation zwischen Router A und Router B findet statt.

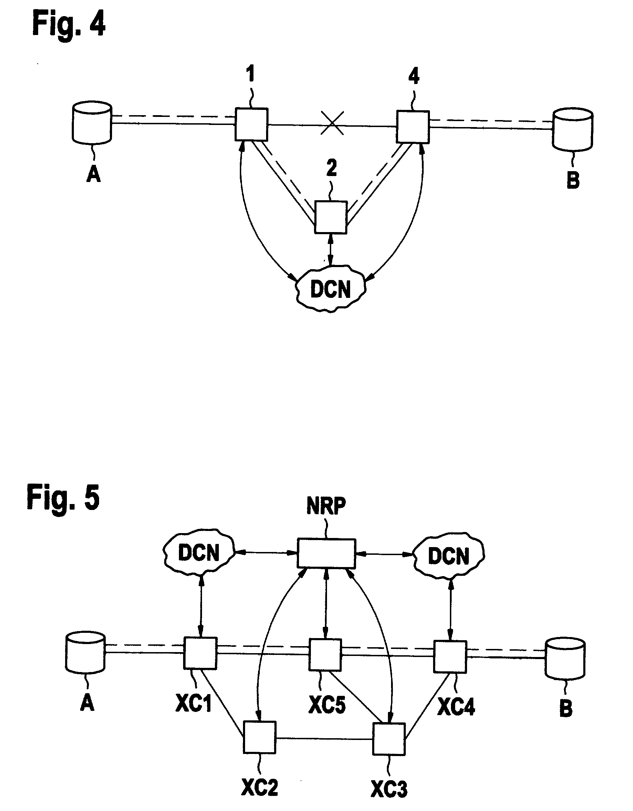

Fig. 4 zeigt ein Beispiel des Auffinden eines neuen Pfads im Falle einer Störung. Das Netz gleicht dem Netz aus Fig. 2 mit dem Unterschied, dass Netzelement 3 zum Zwecke der Vereinfachung weggelassen wurde.

Im ersten Schritt detektiert Netzelement 1 eine Störung zwischen der Übertragung zwischen Netzelement 1 und Netzelement 4 durch Auswertung der Overhead Information auf dem Segment Netzelement 1 - Netzelement 4.

Im zweiten Schritt verteilt Netzelement 1 die Störungsinformation über das Overlay Netz DCN. Alle Netzelement-Datenbanken werden daraufhin upgedated. Zusätzlich zu Netzelement 1 kann auch Netzelement 4 diese Information verteilen.

Im dritten Schritt schaltet Netzelement 1 den Pfad Router A - Router B auf das Segment Netzelement 1 - Netzelement 2. Netzelement 1 wird diese Entscheidung basierend auf seiner Datenbank treffen und bei der nächsten unbelegten Verbindungsmöglichkeit.

Im vierten Schritt detektiert Netzelement 2 die neue Pfad Information auf Segment Netzelement 1 - Netzelement 2. Nach Evaluierung der Pfad Information wird Netzelement 2 entscheiden, den Pfad Router A - Router B auf das Segment Netzelement 2 - Netzelement 4 zu schalten.

Im fünften Schritt detektiert Netzelement 4 die neue Pfad Information auf Segment Netzelement 2 - Netzelement 4. Nach Evaluierung der Pfad Information wird Netzelement 4 entscheiden, den Pfad Router A - Router B auf das Segment Netzelement 4 - Router B zu schalten. Damit ist ein Bypass geschaffen, der die Störung umgeht.

Alternativ zum fünften Schritt kann Netzelement 4 eine Selektionsfunktion einrichten, die unabhängig vom Ursprung der Information dasjenige Segment zu Router B durchschaltet, auf welchem die bessere Empfangsqualität vorhanden ist. Ist die Störung auf Segment Netzelement 1 - Netzelement 4 z.B. nur vorübergehend und empfängt Netzelement auf Segment Netzelement 1 - Netzelement 4 eine bessere Qualität als auf Segment Netzelement 2 - Netzelement 4, so schaltet Netzelement 4 den Pfad Netzelement 1- Netzelement 4 - Router B, sobald die Störung vorüber ist.

Das dritte Ausführungsbeispiel wird nun anhand der Figur 5 erläutert. Fig. 5 zeigt ein Netz mit ausgelagerter Routingentscheidung.

Das Netz beinhaltet zwei Router A und B, fünf Netzelemente XC1 bis XC5, die als Cross-Connects ausgeführt sind, sowie einen Netzwerk Route Prozessor NRP und zwei Overlay Netze DCN, die auch zu einem Netz zusammengefasst sein können.

Die Netzelemente XC1 und XC4 sind neue Netzelemente, die in der Lage sind unter Verwendung der eigenen Verbindungstabelle selbstständig zu routen. Die Netzelemente XC2, XC3, XC5 sind bereits im Betrieb befindliche Netzelemente, bei denen die Routing Aufgabe ausgelagert durch den Netzwerk Route Prozessor NRP übernommen wird. Bestehende Netze können so auf einfache Art und Weise erweitert werden, neue und alte Netzelemente gemischt verwendet werden.

Router A ist über eine Reihenschaltung der Netzelemente XC1, XC5, XC4 mit Router B verbunden. Netzelement XC1 ist über eine Reihenschaltung der Netzelemente XC2, XC3 mit Netzelement XC4 verbunden. Netzelement XC5 ist mit Netzelement XC3 verbunden.

Die Funktionsweise des Routens, dem Schalten der Pfade, dem Aufbau der Verbindungstabellen, dem Verteilen der Verbindungsinformationen, etc. ist vergleichbar dem Netz aus Fig.2.

Der Netzwerk Route Prozessor NRP überwacht den Verkehr auf dem Overlay Netz DCN für die Netzelemente XC2, XC3, XC5, insbesondere für Zwecke eines Pfad Setups. Der Netzwerk Route Prozessor NRP routet den Pfad innerhalb des durch die Netzelemente XC2, XC3, XC5 gebildeten Subnetzes und steuert die Netzelemente XC2, XC3, XC5 derart an, dass die entsprechenden Durchschaltungen des Pfads erfolgen. Im Falle einer Störung innerhalb des Subnetzes kann der Netzwerk Route Prozessor NRP selbstständig über einen Bypass entscheiden und diesen schalten ohne das Overlay Netz DCN mit unnötigen Informationen zu belasten.

Bei allen Ausführungsbeispielen ist eine recht kleine Anzahl von Elementen vorhanden. Dies dient der Übersichtlichkeit und der beispielhaften Erläuterung des Prinzips. Die Netze können eine hohe Anzahl von Elementen aufweisen, z.B. hundert oder tausend Router, hundert oder tausend Netzelemente, ein oder mehr, z.B. zehn Overlay Netze und ein oder mehr, z.B. zehn Netzwerk Route Prozessoren. Die Netzwerk Route Prozessoren sind beispielsweise hierarchisch organisiert; so steuert ein Netzwerk Route Prozessor beispielsweise drei Netzwerk Route Prozessoren, die ihrerseits eine Anzahl von Netzelementen steuern.

## Patentansprüche

1. SONET-, SDH- oder OTN-Netz beinhaltend mindestens zwei Netzelemente (1, 2, 3, 4, XC1, XC4), die direkt oder indirekt miteinander verbunden sind und jeweils geeignet sind, selbstständig die Ermittlung und Schaltung eines Pfads durch zumindest einen Teil des SONET-, SDH- oder OTN-Netzes vorzunehmen, wobei die Ermittlung des Pfads aus in den Netzelementen (1, 2, 3, 4, XC1, XC4) abgespeicherten Verbindungsinformationen und einer im Pfad Identifier enthaltenen Zieladresse erfolgt.

2. SONET-, SDH- oder OTN-Netz nach Anspruch 1, **dadurch gekennzeichnet, dass** mindestens ein Overlay-Netz (DCN) vorhanden ist, über das die Verbindungsinformationen verteilt werden.

3. Verfahren zum Schalten eines Pfads durch ein SONET-, SDH- oder OTN-Netz, bei dem ein Pfad Identifier beinhaltend die Zieladresse übertragen wird und bei dem im SONET-, SDH- oder OTN-Netz befindliche Netzelemente (1, 2, 3, 4, XC1, XC4) selbstständig die Ermittlung und Schaltung des Pfads vornehmen, wobei die Ermittlung des Pfads aus in den Netzelementen (1, 2, 3, 4, XC1, XC4) abgespeicherten Verbindungsinformationen und der Zieladresse erfolgt.

4. Netzelement (1, 2, 3, 4, XC1, XC4) für ein SONET-, SDH- oder OTN-Netz, beinhaltend einen Prozessor und einen Speicher zum Empfang und zum Speichern von Verbindungsinformationen und eines Pfad Identifiers sowie zur Ermittlung eines Pfads durch zumindest einen Teil des SONET-, SDH- oder OTN-Netzes aus den Verbindungsinformationen und einer im Pfad Identifier enthaltenen Zieladresse und zur selbstständigen Schaltung des Pfads zu einem benachbarten Netzelement.

5. Netzwerk Route Prozessor (NRP) zur Steuerung mindestens eines Netzelements (XC2, XC3, XC5) für ein SONET-, SDH- oder OTN-Netz, beinhaltend einen Prozessor und einen Speicher zum Empfang und zum Speichern von Verbindungsinformationen und eines Pfad Identifiers sowie zur Ermittlung eines Pfads durch zumindest einen Teil des SONET-, SDHoder OTN-Netzes aus den Verbindungsinformationen und einer im Pfad Identifier enthaltenen Zieladresse und zur Ansteuerung mindestens eines Netzelements (XC2, XC3, XC5) zwecks Schaltung des Pfads.
